# FASCICULE DE BREVET EUROPEEN

(11) **EP 2 387 497 B1**
(45) Date de publication et mention de la délivrance du brevet: **26.06.2013**
(21) Numéro de dépôt: 09805732.6
(22) Date de dépôt: 17.12.2009
(51) Int. Cl.: B29C 70/54, B29C 70/24, B29B 11/16, F01D 5/28, B29L 31/08, D03D 25/00

(54) **PROCEDE DE FABRICATION D'UNE AUBE DE TURBOMACHINE**
VERFAHREN ZUR HERSTELLUNG EINER TURBINENLEITSCHAUFEL
METHOD FOR MANUFACTURING A TURBINE ENGINE VANE

(30) Priorité: 18.12.2008 FR 0858763
(43) Date de publication de la demande: 23.11.2011
(73) Titulaire: Snecma, 75015 Paris (FR)
(72) Inventeur: MAHIEU, Jean, Noël, F-75014 Paris (FR); ROMERO, Jean-Louis, F-77000 Melun (FR)
(74) Mandataire: Intès, Didier Gérard André
(86) Numéro de dépôt international: PCT/FR2009/052596
(87) Numéro de publication internationale: WO 2010/076513

(56) Documents cités:
- EP-A- 1 777 063
- EP-A- 1 916 092
- US-A1- 2003 056 847

## Description

L'invention se rapporte à un procédé de fabrication, par tissage tridimensionnel (3D) d'une aube de turbomachine, particulièrement mais non exclusivement une aube de grande dimension, par exemple pour une soufflante de turboréacteur d'avion. L'invention concerne plus particulièrement un perfectionnement permettant de mieux contrôler la mise en oeuvre de certaines étapes du procédé pour que les caractéristiques finales de l'aube soient aussi proches que possibles de celles d'une aube témoin jugée optimale.

Le document EP 1 777 063 décrit un procédé de fabrication d'une aube obtenue à partir d'une préforme réalisée par tissage 3D de fils de trame et de fils de chaîne. Typiquement, ces fils sont réalisés en fibres de carbone. La préforme ainsi obtenue est ensuite mise en forme par positionnement dans un moule adapté avant d'être compactée et rigidifiée. Enfin, la préforme ainsi conditionnée est placée dans un moule chauffant formant étuve dans lequel on injecte une résine thermodurcissable. L'aube à l'état brut extraite du moule a pratiquement sa forme et ses dimensions définitives et ne nécessite qu'un minimum de retouches par usinage.

Dans la fabrication de la préforme ou ébauche, on dispose d'un véritable métier à tisser permettant de déterminer le contour et l'épaisseur en tous points de ladite préforme. Typiquement, dans un métier à tisser de ce genre, les fils de chaîne sont répartis en 32 couches, chaque couche étant composée de plusieurs centaines de fils. Les fils de chaîne sont aussi appelés torons dans la technique considérée. Grâce au métier à tisser, on peut positionner individuellement tous ces fils de chaîne de part et d'autre de la direction de passage des fils de trame, ce qui permet une détermination totale du tissage concernant le contour de la préforme, sa texture et son épaisseur en tous points. Avec cette technique, même le pied d'aube peut être réalisé d'un seul tenant avec la pâle.

Pour donner à la préforme ses caractéristiques dimensionnelles, certains fils cessent d'être tissés à partir d'un certain stade. Ils sont ensuite coupés aux endroits où ils ressortent de la masse tissée. Il en résulte, esquissées en pointillés, des lignes courbes définies par ces extrémités coupées. C'est particulièrement le cas des extrémités coupées des fils de chaîne.

L'invention découle d'observations résultant d'un grand nombre de tests destinés à définir les caractéristiques d'une aube optimale, c'est-à-dire présentant une résistance maximum aux types d'impact auxquels une telle aube est susceptible d'être soumise pendant sa durée d'utilisation. On a pu mettre en évidence, pour chaque type d'aube, une correspondance certaine entre la résistance de l'aube et la configuration des lignes courbes. Ceci à permis de définir, par des tests successifs, un tissage idéal représenté par une configuration optimale de l'ensemble de ces lignes courbes (c'est-à-dire les emplacements précis de toutes ces coupures) pour laquelle l'aube produite, si elle possède cette configuration, peut être considérée comme la plus performante.

Selon l'invention, on s'attache donc, tout au long de la fabrication d'une telle aube, à prendre cette configuration de lignes courbes pour référence et à faire en sorte et ou vérifier qu'elle est et reste aussi proche que possible de la configuration correspondante de l'aube optimale préalablement déterminée et mémorisée sous une forme ou sous une autre.

Plus précisément, l'invention concerne donc un procédé de fabrication d'une aube par tissage 3D d'une préforme selon lequel on coupe des fils de chaîne et de trame à des emplacements prédéterminés de façon à définir les contours et le volume de ladite préforme, on conforme ladite préforme et on imprègne de résine ladite préforme conformée, caractérisé par les étapes consistant :
- à assurer la visibilité des extrémités coupées d'au moins certains fils, pour faire apparaître des lignes courbes,
- à au moins comparer la configuration de ces lignes courbes avec une configuration de référence et
- à exploiter le résultat de cette comparaison pour l'élaboration de l'aube.

Les fils de trame et de chaîne sont de préférence à base de fibres de carbone. Au moins certains fils, de préférence les fils de chaîne sont entourés d'une gaine d'ensimage.

Ce processus de contrôle, actif ou passif, peut être appliqué à différents stades de la fabrication de l'aube, notamment pendant la conformation qui peut comprendre une mise en forme suivie d'un compactage.

Ainsi, après le tissage de la préforme, on coupe les fils de chaîne et de trame pour extraire la préforme du métier à tisser. On obtient alors une masse relativement malléable qu'il s'agit de mettre en forme puis de compacter en lui donnant une certaine rigidité avant de procéder à l'imprégnation de résine qui lui donne sa forme et ses dimensions quasi définitives ainsi que son exceptionnelle résistance aux chocs. Le principe de l'invention tel que défini plus haut peut s'appliquer successivement à plusieurs de ces étapes.

Ainsi, de façon générale, pendant la conformation, on agit sur la préforme pour faire sensiblement coïncider ses lignes courbes avec celles d'une telle configuration de référence. On peut envisager d'agir ainsi sur la préforme à plusieurs stades avant la phase d'imprégnation mais principalement, bien évidemment, au moment de la phase de mise en forme qui suit immédiatement le tissage. En effet, la possibilité de se repérer à partir de la configuration visible (ou au moins détectable) des lignes courbes permet d'adapter le positionnement de la préforme dans son gabarit de conformation (une partie du moule de compactage, par exemple) et d'agir sur l'enchevêtrement des fils encore malléable pour donner effectivement (on peut parler d'un contrôle actif) aux lignes courbes, la configuration la plus proche possible de la configuration optimale prédéterminée.

On peut aussi effectuer un contrôle ultérieurement après compactage.

Autrement dit, le procédé peut être aussi caractérisé en ce que l'on compacte ladite préforme après mise en forme et en ce qu'on vérifie que ses lignes courbes coïncident sensiblement avec celles d'une configuration de référence correspondante. Cette vérification ou contrôle permet de s'assurer que le compactage n'a pas modifié la configuration optimale des lignes courbes, représentative à la fois du tissage et d'une conformation optimale de la préforme. Si ce n'est pas le cas, on peut soit reprendre l'étape de compactage pour obtenir une configuration acceptable des lignes courbes soit mettre l'ébauche au rebut, si ce n'est pas possible.

Enfin, un contrôle final du même type peut être effectué après imprégnation.

Autrement dit, on sélectionne une aube en cours de fabrication, après imprégnation si ses lignes courbes coïncident sensiblement avec celles d'une configuration de référence correspondante.

Comme indiqué précédemment, le procédé s'applique préférentiellement via le repérage des coupures des fils de chaîne, par exemple en accentuant leur visibilité. Cependant, le procédé pourrait aussi s'appliquer en accentuant la visibilité des coupures des fils de trame.

Selon un mode de réalisation possible, on peut colorer les extrémités coupées des fils de chaîne (en les marquant d'une goutte de pigment) ou celles des fils de trame. On peut envisager de combiner les deux repérages en choisissant des couleurs différentes.

Selon une autre possibilité, on peut colorer un revêtement d'ensimage d'au moins certains fils pour accentuer la visibilité des extrémités coupées de ceux-ci. On rappelle que l'ensimage est le revêtement des fils qui, en fondant sous l'effet de la chaleur lors de l'opération de compactage, permet de lier les fils les uns aux autres et d'obtenir une structure présentant une certaine rigidité sans cependant faire obstacle à l'imprégnation ultérieure.

A titre d'exemple, une étape de comparaison précitée est effectuée en superposant à la préforme ou ébauche une configuration de lignes courbes de référence reportées sur un support transparent.

Il est à noter que ladite configuration optimale peut évoluer légèrement d'une étape à l'autre, ce qui peut impliquer plusieurs supports transparents différents.

Selon encore une autre variante, une étape de comparaison précitée est effectuée en relevant optiquement lesdites lignes courbes de la préforme ou ébauche, en créant un fichier informatique à partir de ce relevé et en le comparant avec un fichier informatique de référence, correspondant.

Là encore, il peut y avoir plusieurs fichiers de référence correspondants à des étapes de contrôle différentes.

L'invention sera mieux comprise et d'autres avantages de celles-ci apparaîtront plus clairement à la lumière de la description qui va suivre d'un exemple de procédé de fabrication d'une aube par tissage 3D conforme à son principe, donnée uniquement à titre d'exemple et faite en référence aux dessins annexés dans lesquels :
- la figure 1 est une vue schématique illustrant le tissage 3D de la préforme ;
- la figure 2 illustre schématiquement la préforme tissée ;
- la figure 3 est une vue schématique illustrant la mise en forme effective de ladite préforme après tissage ;
- la figure 4 est une vue schématique illustrant le compactage ; et
- la figure 5 est une vue schématique illustrant l'imprégnation.

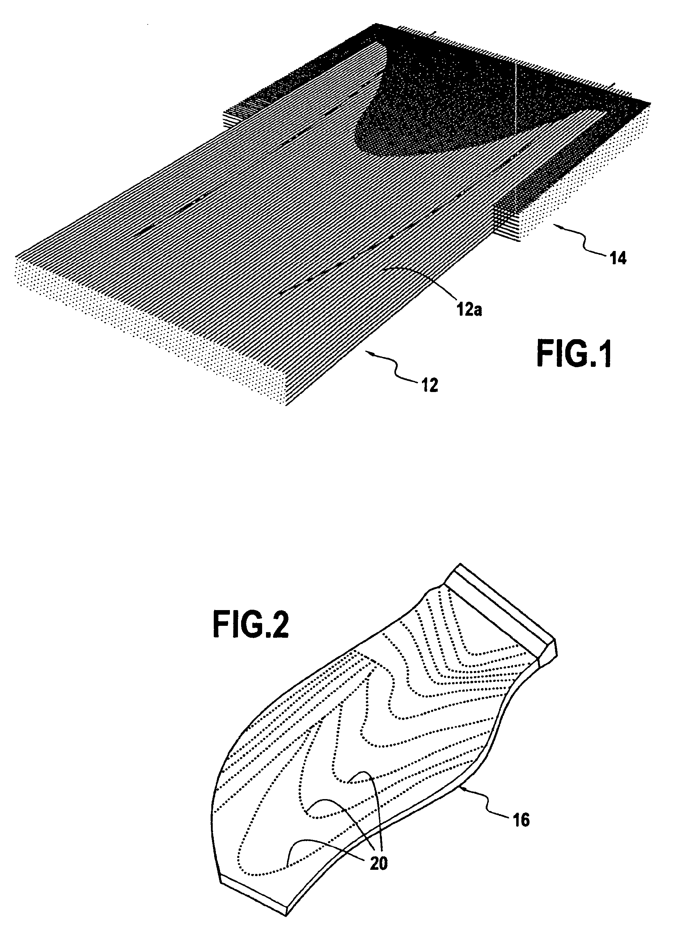

La figure 1 illustre le tissage proprement dit de l'aube à l'aide d'un métier à tisser de type jacquard sur lequel on a disposé un faisceau 12 de fils de chaîne ou torons comportant par exemple 32 couches de plusieurs centaines de fils chacune. Le mécanisme est tel que l'on peut agir sur chacun de ces fils transversalement aux nappes de fils de chaîne tels que représentées, pour insérer les fils de trame 14. Pendant le tissage du pied d'aube, qui est la partie la plus épaisse, les 32 couches sont impliquées dans le tissage puis, progressivement, au fur et à mesure du tissage de l'aube dont l'épaisseur va décroissante, un certain nombre de fils de chaîne 12a ne sont plus tissés, ce qui permet d'obtenir une préforme de contour et d'épaisseur voulue continument variable. A la fin du tissage, la préforme 16 apparaît rattachée au milieu d'un enchevêtrement de deux séries de fils de chaîne et de trame. On procède alors au sectionnement des fils de chaîne et de trame à la limite de la masse tissée.

On dispose alors d'une préforme 16 telle que représentée sur la figure 2.

Selon une caractéristique importante de l'invention, on accentue la visibilité des extrémités coupées 18 d'au moins certains fils, par exemple ici uniquement les fils de chaîne, ce qui fait apparaître des lignes courbes 20, en pointillés, à la surface de la préforme. Comme indiqué précédemment, on peut colorer chaque extrémité coupée par un point de pigment. Selon une autre possibilité, si les fils ont été préalablement recouverts d'une gaine de matériau d'ensimage d'une couleur souhaitée, alors le simple fait de couper le fil fera ressortir l'extrémité elle-même d'une couleur différente, à savoir la couleur de la fibre de carbone.

Dans tous les cas, la préforme 16 est remarquable en ce que les extrémités coupées des fils de chaîne apparaissent en pointillés de façon bien visibles, grâce au contraste des couleurs.

Le procédé se poursuit en plaçant cette préforme 16, encore malléable (du fait qu'il ne s'agit que d'une masse de fils enchevêtrés par le tissage) dans un moule de mise en forme 23a qui, par exemple, est la partie inférieure d'un moule de compactage 23a, 23b.

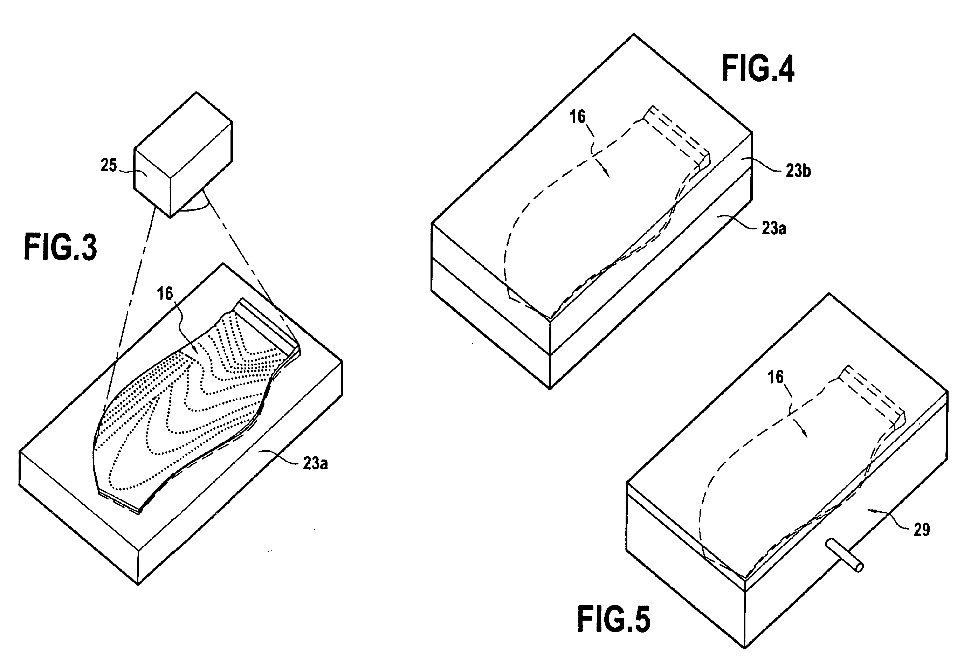

A cette étape, on peut projeter sur la préforme (projecteur 25) l'image des lignes courbes d'une préforme idéale prédéterminée. L'opérateur peut ainsi ajuster la mise en place de la préforme dans le moule de mise en forme 23a pour faire coïncider les lignes pigmentées de la préforme avec celles qui sont projetées. C'est le résultat illustré sur la figure 3.

En variante, on peut au contraire relever optiquement l'image de la préforme 16 dans le moule de mise en forme, traduire cette image et notamment celle des lignes courbes 20 en un fichier informatique et comparer le contenu de ce fichier avec celui d'un fichier de référence représentatif des lignes courbes de l'aube de référence.

L'étape suivante, illustrée à la figure 4 est en soit classique. Il s'agit de réaliser le compactage et une première rigidification de la préforme 16. La partie supérieure 23b du moule de compactage est mise en place. Le moule est refermé sous pression et avec chauffage pour réaliser le compactage avec fusion des gaines d'ensimage ce qui permet d'obtenir une préforme d'une certaine rigidité. A l'issue du compactage, on peut renouveler l'opération de contrôle en projetant à nouveau une configuration de lignes courbes d'une préforme idéale (considérée à ce stade de sa fabrication) pour au moins vérifier que le positionnement correct de la préforme n'a pas été affecté par l'opération de compactage.

L'opération suivante est illustrée à la figure 5 ; il s'agit de l'imprégnation de la préforme 16 par de la résine. Cette opération est aussi classique ; l'aube compactée est transportée dans un moule 29 formant étuve pour l'injection de la résine thermodurcissable.

A l'issue de cette opération d'imprégnation, les lignes courbes sont encore visibles à la surface de la préforme imprégnée et il est possible de renouveler l'opération de contrôle pour s'assurer que l'imprégnation n'a pas modifié de façon significative la configuration desdites lignes courbes.

A l'issue de ce contrôle et si celui-ci est positif, la préforme est sélectionnée et subit un usinage qui lui donne sa forme définitive. Si ce n'est pas le cas, la préforme imprégnée est mise au rebut.

Comme mentionné précédemment, l'opération de contrôle qui peut être répétée à plusieurs étapes du procédé peut aussi s'effectuer à l'aide d'au moins un support transparent sur lequel on a reporté des lignes courbes de référence correspondant à celles d'une aube optimale.

## Revendications

1. Procédé de fabrication d'une aube par tissage 3D d'une préforme (16) selon lequel on coupe des fils de chaîne (12a) et de trame (14) à des emplacements prédéterminés de façon à définir les contours et le volume de ladite préforme, on conforme ladite préforme et on imprègne de résine ladite préforme conformée, **caractérisé par** les étapes consistant :
- à assurer la visibilité des extrémités coupées d'au moins certains fils, pour faire apparaître des lignes courbes (20),
- à au moins comparer (25) la configuration de ces lignes courbes avec une configuration de référence et
- à exploiter le résultat de cette comparaison pour l'élaboration de l'aube.

2. Procédé selon la revendication 1, **caractérisé en ce qu'**on agit sur ladite préforme pour sensiblement faire coïncider ses lignes courbes (20) avec celles d'une telle configuration de référence, avant la phase d'imprégnation.

3. Procédé selon l'une des revendications précédentes, **caractérisé en ce qu'**on met en forme (23a) ladite préforme après tissage et **en ce que** l'on vérifie que ses lignes courbes coïncident sensiblement avec celles d'une configuration de référence correspondante.

4. Procédé selon la revendication 3, **caractérisé en ce qu'**on compacte (23a, 23b) ladite préforme après mise en forme et **en ce que** l'on vérifie que ses lignes courbes coïncident sensiblement avec celles d'une configuration de référence correspondante.

5. Procédé selon l'une des revendications précédentes, **caractérisé en ce que** l'on sélectionne une aube en cours de fabrication, après imprégnation (29), si ses lignes courbes coïncident sensiblement avec celles d'une configuration de référence correspondante.

6. Procédé selon l'une des revendications précédentes, **caractérisé en ce qu'**il consiste à accentuer la visibilité d'au moins les extrémités coupées des fils de chaîne (12a).

7. Procédé selon l'une des revendications précédentes, **caractérisé en ce qu'**il consiste à colorer les extrémités coupées des fils de chaîne (12a).

8. Procédé selon l'une des revendications précédentes, **caractérisé en ce qu'**il consiste à colorer les extrémités coupées des fils de trame (14).

9. Procédé selon l'une des revendications 1 à 6, **caractérisé en ce qu'**il consiste à colorer un revêtement d'ensimage d'au moins certains fils, pour accentuer la visibilité des extrémités coupées de ceux-ci.

10. Procédé selon l'une des revendications précédentes, **caractérisé en ce qu'**une étape de comparaison précitée est effectuée en relevant optiquement lesdites lignes courbes de la préforme, en créant un fichier informatique à partir de ce relevé et en le comparant avec un fichier informatique de référence, correspondant.

11. Procédé selon l'une des revendications 1 à 9, **caractérisé en ce qu'**une étape de comparaison précitée est effectuée en superposant à ladite préforme une configuration de lignes courbes de référence reportée sur un support transparent.

## Patentansprüche

1. Verfahren zur Herstellung einer Schaufel durch 3D-Weben eines Vorformlings (16), wonach Kettfäden (12a) und Schußfäden (14) an vorbestimmten Stellen geschnitten werden, um die Konturen und das Volumen des Vorformlings zu definieren, der Vorformling gestaltet wird und der gestaltete Vorformling mit Harz imprägniert wird, **gekennzeichnet durch** die Schritte, die darin bestehen:
- die Sichtbarkeit der geschnittenen Enden von wenigstens einigen Fäden zu gewährleisten, um gebogene Linien (20) zum Vorschein zu bringen,
- die Anordnung dieser gebogenen Linien mit einer Referenzanordnung wenigstens zu vergleichen (25) und
- das Ergebnis dieses Vergleichs für die Entwicklung der Schaufel auszuwerten.

2. Verfahren nach Anspruch 1, **dadurch gekennzeichnet, daß** vor der Imprägnierungsphase auf den Vorformling eingewirkt wird, um seine gebogenen Linien (20) mit denjenigen einer solchen Referenzanordnung im wesentlichen in Übereinstimmung zu bringen.

3. Verfahren nach einem der vorhergehenden Ansprüche, **dadurch gekennzeichnet, daß** der Vorformling nach dem Weben in Form gebracht wird (23a) und daß überprüft wird, ob seine gebogenen Linien mit denjenigen einer entsprechenden Referenzanordnung im wesentlichen zusammenfallen.

4. Verfahren nach Anspruch 3, **dadurch gekennzeichnet, daß** der Vorformling nach dem Informbringen verdichtet wird (23a, 23b) und daß überprüft wird, ob seine gebogenen Linien mit denjenigen einer entsprechenden Referenzanordnung im wesentlichen zusammenfallen.

5. Verfahren nach einem der vorhergehenden Ansprüche, **dadurch gekennzeichnet, daß** eine in der Herstellung befindliche Schaufel nach dem Imprägnieren (29) ausgewählt wird, wenn ihre gebogenen Linien mit denjenigen einer entsprechenden Referenzanordnung im wesentlichen zusammenfallen.

6. Verfahren nach einem der vorhergehenden Ansprüche, **dadurch gekennzeichnet, daß** es darin besteht, die Sichtbarkeit wenigstens der geschnittenen Enden der Kettfäden (12a) zu erhöhen.

7. Verfahren nach einem der vorhergehenden Ansprüche, **dadurch gekennzeichnet, daß** es darin besteht, die geschnittenen Enden der Kettfäden (12a) zu färben.

8. Verfahren nach einem der vorhergehenden Ansprüche, **dadurch gekennzeichnet, daß** es darin besteht, die geschnittenen Enden der Schußfäden (14) zu färben.

9. Verfahren nach einem der Ansprüche 1 bis 6, **dadurch gekennzeichnet, daß** es darin besteht, einen Schlichteüberzug wenigstens einiger Fäden zu färben, um die Sichtbarkeit der geschnittenen Enden dieser zu erhöhen.

10. Verfahren nach einem der vorhergehenden Ansprüche, **dadurch gekennzeichnet, daß** ein vorgenannter Vergleichsschritt dadurch vollzogen wird, daß die gebogenen Linien des Vorformlings optisch erfaßt werden, aus dieser Erfassung eine Datei erzeugt wird und diese mit einer entsprechenden Referenzdatei verglichen wird.

11. Verfahren nach einem der Ansprüche 1 bis 9, **dadurch gekennzeichnet, daß** ein vorgenannter Vergleichsschritt dadurch vollzogen wird, daß über den Vorformling eine auf einen transparenten Träger übertragene Referenzanordnung gebogener Linien gelegt wird.

## Claims

1. A method of fabricating a blade by 3D weaving a preform (16) in which warp yarns (12a) and weft yarns (14) are cut at predetermined locations in order to define the outlines and the volume of said preform, said preform is shaped, and said shaped preform is impregnated with resin, the method being **characterized by** the steps consisting in:
• ensuring that the cut ends of at least some yarns are visible so as to make curved lines (20) appear;
• at least comparing (25) the configuration of these curved lines with a reference configuration; and
• using the result of this comparison for preparing the blade.

2. A method according to claim 1, **characterized in that** action is taken on said preform to ensure that its curved lines (20) coincide substantially with the curved lines of such a reference configuration, prior to the impregnation stage.

3. A method according to either preceding claim, **characterized in that** said preform after weaving is shaped (23a) and **in that** it is verified whether its curved lines coincide substantially with the curved lines of a corresponding reference configuration.

4. A method according to claim 3, **characterized in that** said preform is compacted (23a, 23b) after it has been shaped, and **in that** it is verified whether its curved lines coincide substantially with the curved lines of a corresponding reference configuration.

5. A method according to any preceding claim, **characterized in that**, after impregnation (29), a blade that is being fabricated is selected provided its curved lines coincide substantially with the curved lines of a corresponding reference configuration.

6. A method according to any preceding claim, **characterized in that** it consists in accentuating the visibility of at least the cut ends of the warp yarns (12a).

7. A method according to any preceding claim, **characterized in that** it consists in coloring the cut ends of the warp yarns (12a).

8. A method according to any preceding claim, **characterized in that** it consists in coloring the cut ends of the weft yarns (14).

9. A method according to any one of claims 1 to 6, **characterized in that** it consists in coloring a sizing covering of at least some of the yarns in order to accentuate the visibility of the cut ends thereof.

10. A method according to any preceding claim, **characterized in that** an above-mentioned comparison step is performed by optically imaging said curved lines of the preform, by creating a computer file from said image, and by comparing it with a corresponding reference computer file.

11. A method according to any one of claims 1 to 9, **characterized in that** an above-mentioned comparison step is performed by superposing areference configuration of curved lines marked on a transparent medium onto said preform.
